(19) Europäisches Patentamt
European Patent Office
Office européen des brevets

(11) **EP 4 202 729 A1**

(12) **EUROPEAN PATENT APPLICATION**
published in accordance with Art. 153(4) EPC

(43) Date of publication:
28.06.2023 Bulletin 2023/26

(51) International Patent Classification (IPC):
*G06F 16/951* (2019.01)

(21) Application number: 22836504.5

(22) Date of filing: 07.03.2022

(86) International application number:
PCT/CN2022/079548

(87) International publication number:
WO 2023/279744 (12.01.2023 Gazette 2023/02)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 05.07.2021 CN 202110760039

(71) Applicant: Beijing Baidu Netcom
Science and Technology Co., Ltd.
Beijing 100085 (CN)

(72) Inventors:
• DING, Yu
Beijing 100085 (CN)
• HONG, Liang
Beijing 100085 (CN)

(74) Representative: Maiwald GmbH
Elisenhof
Elisenstraße 3
80335 München (DE)

(54) **METHOD AND APPARATUS FOR GRABBING PRESSURE, ELECTRONIC DEVICE AND READABLE STORAGE MEDIUM**

(57) A method and an apparatus for controlling grabbing pressure, an electronic device, and a readable storage medium, which relate to the technical field of computers, and in particular, to the technical field of content recommendation. The method for controlling grabbing pressure comprises: matching a website to be grabbed to a pre-configured pressure unit on the basis of a website of said website (S 110); determining a first grabbing pressure limit value and a second grabbing pressure limit value on the basis of historical grabbing data of the pressure unit (S120); and controlling the grabbing pressure of the pressure unit in the current grabbing period on the basis of the first grabbing pressure limit value and the second grabbing pressure limit value (S130). Further provided are an apparatus for controlling grabbing pressure, an electronic device and a readable storage medium.

```
matching a website to be scraped to a pre-
configured pressure unit based on a URL of the      ⌐S110
website to be scraped
                    ↓
determining a first scraping pressure limit and a   ⌐S120
second scraping pressure limit based on historical
scraping data of the pressure unit
                    ↓
controlling a scraping pressure of the pressure unit
in a current scraping period based on the first
scraping pressure limit and the second scraping     ⌐S130
pressure limit, wherein the scraping pressure is less
than the second scraping pressure limit, and the
scraping pressure is greater than the first scraping
pressure limit in response to a preset pressure
condition being satisfied
```

FIG. 1

EP 4 202 729 A1

## Description

## TECHNICAL FIELD

The present disclosure relates to a field of computer technologies, and in particular, to a field of content recommendation technology, and specifically to a method and an apparatus for controlling a scraping pressure, an electronic device, and a readable storage medium.

## BACKGROUND

Scraping results of Spider are important content sources for searching, and Spider provides massive web resources for searching every day, so that Spider scraping is closely related to search ecology. When a scraping pressure of a site is too high, a problem of scraping failure may be caused by blocking an export and a user-agent (UA) by the site or a bearing pressure of the site itself. And once the scraping fails, the waste of the scraping quota may be caused.

Therefore, how to avoid the problem of scraping failure has become an urgent problem to be solved.

## SUMMARY

The present disclosure provides a method and an apparatus for controlling a scraping pressure, an electronic device, and a readable storage medium.

According to a first aspect of the present disclosure, a method for controlling a scraping pressure is provided. The method includes:

matching a website to be scraped to pre-configured pressure units based on a uniform resource locator (URL) of the website to be scraped;
determining a first scraping pressure limit and a second scraping pressure limit based on historical scraping data of the pressure unit; and
controlling the scraping pressure of the pressure unit within a current scraping period based on the first scraping pressure limit and the second scraping pressure limit, in which, the scraping pressure is less than the second scraping pressure limit, and the scraping pressure is greater than the first scraping pressure limit in response to a preset pressure condition being satisfied.

According to a second aspect of the present disclosure, an apparatus for controlling a scraping pressure is provided. The apparatus includes:

a pressure unit matching module, configured to match a website to be scraped to a pre-configured pressure unit based on a URL of the website to be scraped;
a pressure limit determining module, configured to determine a first scraping pressure limit and a second scraping pressure limit based on historical scraping data of the pressure unit; and
a scraping pressure control module, configured to control the scraping pressure of the pressure unit within a current scraping period based on the first scraping pressure limit and the second scraping pressure limit, in which, the scraping pressure is less than the second scraping pressure limit, and the scraping pressure is greater than the first scraping pressure limit in response to a preset pressure condition being satisfied.

According to a third aspect of the present disclosure, an electronic device is provided, which includes:

at least one processor; and
a memory communicatively coupled to the at above least one processor; in which,
the memory is stored with instructions executable by the at least one processor, in which, the instructions are executed by the at least one processor, the at least one processor is caused to execute the method for controlling the scraping pressure above.

According to a fourth aspect of the present disclosure, a non-transitory computer-readable storage medium storing computer instructions is provided, in which the computer instructions are configured to execute the method for controlling the scraping pressure above by the computer.

According to a fifth aspect of the present disclosure, a computer program product is provided, and includes a computer program, in which the computer program is configured to execute the method for controlling the scraping pressure above when executed by the processor.

It should be understood that, the content described in the part is not intended to identify key or important features of embodiments of the present disclosure, nor intended to limit the scope of the present disclosure. Other features of the present disclosure will be easy to understand through the following specification.

## BRIEF DESCRIPTION OF THE DRAWINGS

The drawings are intended to better understand the solution, and do not constitute a limitation to the disclosure.

FIG. 1 is a flowchart of a method for controlling a scraping pressure provided in one embodiment of the present disclosure;
FIG. 2 is a diagram of a quadrant used to evaluate a correlation between a scraping pressure and a scraping success rate provided in one embodiment of the present disclosure;
FIG. 3 is a structure diagram of an apparatus for controlling a scraping pressure provided in the present disclosure;

FIG. 4 is a block diagram illustrating an electronic device configured to implement a method for controlling a scraping pressure in the embodiment of the present disclosure.

## DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

In order to avoid the problem of scraping failure, it is necessary to assign an appropriate scraping quota to a site to avoid excessive scraping pressure on the site.

In the related art, an upper pressure limit of a site is calculated by analyzing a historical scraping log and taking account of a historical pressure situation of the site, so that the scraping pressure of the site is not higher than the upper pressure limit, which helps to avoid the scraping pressure of the site being too high, and to avoid the scraping failure.

However, there are still some defects in existing schemes. In the existing schemes, the upper pressure limit of the site is only simply adjusted based on a current number of successful scrapings. This is not convergent enough, and there will be a problem of a pressure fluctuation of the site which is calculated. And once there is no flow higher than the upper pressure limit, the upper pressure limit will remain unchanged, resulting in distortion of the upper pressure limit.

A method for controlling a scraping pressure and an apparatus, an electronic device, and a readable storage medium provided by the embodiment of the present disclosure aim to solve at least one of the above technical problems in the related art.

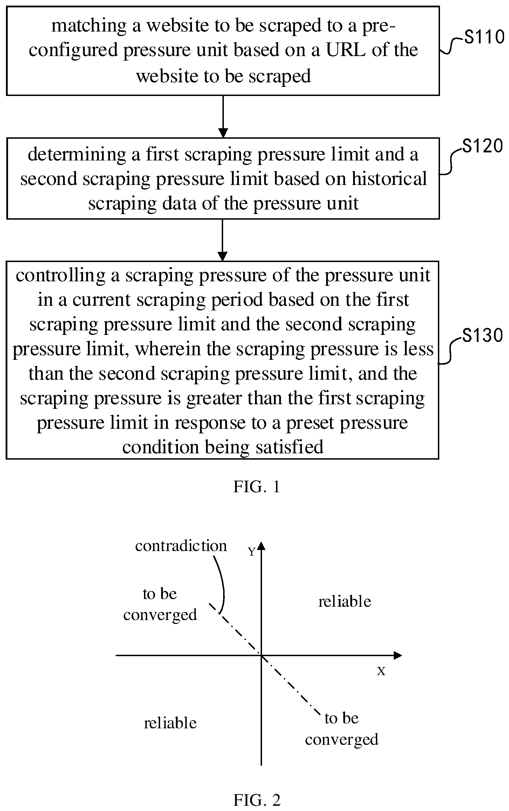

FIG. 1 illustrates a flowchart of a method for controlling a scraping pressure provided in one embodiment of the present disclosure. As shown in FIG. 1, the method may include blocks S 110 to S130.

At S 110, a website to be scraped is matched to a pre-configured pressure unit based on a URL of the website to be scraped.

The pressure unit may be used as a basic unit for controlling a pressure. A scraping pressure control is performed on the pressure unit, which has high control precision.

The URL of the website to be scraped includes multi-dimensional information such as a domain name, a site, an access path, and the like. The pressure unit may correspond to the domain name, the site, and the access path, so that the website to be scraped may be matched to a corresponding pressure unit based on the URL of the website, so as to reflect an actual situation of the scraping pressure from different dimensions, so that the pressure is controlled more accurately.

At S120, a first scraping pressure limit and a second scraping pressure limit are determined based on historical scraping data of the pressure unit.

At S130, a scraping pressure of the pressure unit within a current scraping period is controlled based on the first scraping pressure limit and the second scraping pressure limit, the scraping pressure is less than the second scraping pressure limit, and the scraping pressure may be greater than the first scraping pressure limit in response to a preset pressure condition being satisfied.

The current scraping period is a scraping period for an upcoming scraping task. The historical scraping data may be historical scraping records of each of websites to be scraped in the pressure unit, including but not limited to a historical scraping log and the like, and a historical scraping situation of the website to be scraped in the pressure unit may be reflected. The historical scraping data may be obtained from the scraping period before the current scraping period. The historical scraping data of the pressure unit is analyzed to determine the first scraping pressure limit and the second scraping pressure limit of the pressure unit, which can ensure the accuracy of the first scraping pressure limit and the second scraping pressure limit.

The first scraping pressure limit may be used as an upper limit of a conventional scraping pressure, and when a conventional scraping task is performed, the scraping pressure should not exceed the first scraping pressure limit. In some case where a scraping pressure quota needs to be increased (i.e., a preset pressure condition), the scraping pressure may exceed the first scraping pressure limit, so as to meet an actual scraping requirement, but should not exceed the second scraping pressure limit. The second scraping pressure limit may be used as a mandatory upper limit of the scraping pressure and cannot be challenged, so that site blocking caused by excessive scraping pressure can be avoided.

According to the method provided in the embodiment of the present disclosure, a website to be scraped is matched to a pre-configured pressure unit based on a URL of the website to be scraped. A first scraping pressure limit and a second scraping pressure limit are determined based on historical scraping data of the pressure unit. And a scraping pressure of the pressure unit within a current scraping period is controlled based on the first scraping pressure limit and the second scraping pressure limit. According to the scheme, the website to be scraped is matched to the corresponding pressure unit, the first scraping pressure limit and the second scraping pressure limit are configured for the pressure unit, which achieves a pressure control on the pressure unit. Not only the actual scraping requirement is met, but also the situation that the scraping pressure is too high is avoided, which effectively avoids the problem of scraping failure.

In an optional manner of the present disclosure, the pressure condition is:

the scraping pressure includes an additional scraping pressure, and a scraping task corresponding to the additional scraping pressure needs to be completed within a preset time limit.

The scraping pressure generally may include a conventional scraping pressure and an additional scraping pressure. The additional scraping pressure is generated when there is a real-time scraping demand, and generally is time dependent, that is, it needs to be completed within a preset time limit. The conventional scraping pressure is the scraping pressure that conventionally exists in the scraping period, which is not generated by the real-time scraping demand, and generally is time independent.

When the scraping pressure includes the additional scraping pressure, there may be an additional scraping requirement. The scraping pressure quota needs to be increased. At the moment, the scraping pressure can exceed the first scraping pressure limit, to meet the actual scraping requirement.

In an optional embodiment of the present disclosure, there are at least two pressure units. Each pressure unit is pre-configured with a matching priority. The website to be scraped is matched to the corresponding pressure unit based on the URL of the website to be scraped.

Each of the pressure units with the matching priority is traversed according to an order of matching priority from high to low, and whether the website to be scraped matches any one of the pressure units with the matching priority is sequentially determined based on the URL of the website to be scraped, until the website to be scraped is matched to a pressure unit, or the traversing is ended.

There are at least two pressure units. The matching priority may be used to determine a matching order of each pressure unit when matching the website to be scraped with each pressure unit.

Specifically, it can be determined whether the website to be scraped can be matched to the pressure unit with the highest matching priority according to the order of matching priority from high to low, until the website to be scraped may be matched to a certain pressure unit; or after matching all the pressure units, it determines that the website to be scraped cannot be matched to any pressure unit.

In an optional embodiment of the present disclosure, the pressure units include:

a first pressure unit corresponding to an access path in the URL of the website to be scraped;
a second pressure unit corresponding to a site in the URL of the website to be scraped; and,
a third pressure unit corresponding to a domain name in the URL of the website to be scraped. The matching priorities of the pressure units are sequentially the first pressure unit, the second pressure unit and the third pressure unit from high to low.

The website to be scraped in the first pressure unit may have a same access path. The website to be scraped in the second pressure unit may have a same site. And the website to be scraped in the third pressure unit may have a same domain name.

In this embodiment of the present disclosure, the website to be scraped may be matched to the corresponding pressure units from three dimensions of the domain name, the site, and the access path. By setting multi-dimensional pressure units, the pressure control may be more accurate.

In this embodiment of the present disclosure, a pressure dictionary may be set for the pressure unit, and the pressure dictionary includes the domain name, the site, the access path, and the like corresponding to each pressure unit. The URL of the website to be scraped can be matched with the pressure dictionary, so as to be matched to the corresponding pressure unit.

In an actual matching process, due to the fact that the granularities of the pressure units of the three dimensions is different when the URL is divided, different matching priorities may be set for the pressure units of the three dimensions respectively. Specifically, due to the fact that the granularity of the pressure unit corresponding to the access path is the minimum in the pressure units of the three dimensions, the granularity of the pressure unit corresponding to the site is larger, and the granularity of the pressure unit corresponding to the domain name is the largest in the pressure units of the three dimensions, the matching priority can be set to be that the matching priority of the first pressure unit is higher than that of the second pressure unit, and the matching priority of the second pressure unit is higher than that of the third pressure unit.

Specifically, whether the website to be scraped may be matched to the first pressure unit or not may be preferentially determined. Whether the website to be scraped may be matched to the second pressure unit or not may be determined, when the website to be scraped cannot be matched to the first pressure unit. Whether the website to be scraped may be matched to the second pressure unit or not may be determined, when the website to be scraped cannot be matched to the first pressure unit. And whether the website to be scraped may be matched to the third pressure unit or not may be determined, when the website to be scraped cannot be matched to the second pressure unit.

If the website to be scraped cannot be matched to any one of the pressure units, the website to be scraped may be classified into a wildcard domain dimension. In practice, if there is a plurality of scraping websites that may be classified into the same pressure unit in the wildcard domain, and the plurality of scraping websites continuously exist in a plurality of continuous scraping periods, the pressure unit may be added to the pressure dictionary.

In an optional manner of the present disclosure, before the website to be scraped is matched to the corresponding pressure unit based on the URL of the website to be scraped, the method further includes the following step.

The pressure units are split and/or merged based on the historical scraping data.

In the embodiment of the present disclosure, before the website to be scraped of the current scraping period is matched to the corresponding pressure unit, the pressure units in the pressure dictionary may be split and/or merged based on the historical scraping data.

The historical scraping data may be in a previous scraping period before the current scraping period, or in a plurality of previous scraping period before the current scraping period. The historical scraping data may reflect an actual scraping situation, and the pressure unit is adjusted based on the actual scraping situation, so that the rationality of pressure unit division may be ensured.

In an optional embodiment of the present disclosure, the historical scraping data includes a historical scraping pressure, and the pressure units is merged based on the historical scraping data, which includes:
a first target pressure unit is merged to a corresponding second target pressure unit, in response to there being the first target pressure unit of which an additional scraping pressure in corresponding historical scraping pressures not greater than a first preset value, in which the matching priority of the first target pressure unit is not the lowest, and the matching priority of the second target pressure unit is one level lower than the matching priority of the first target pressure unit.

The first target pressure unit may be a first pressure unit or a second pressure unit. The matching priority of the second target pressure unit is one level lower than that of the first target pressure unit, that is, when the first target pressure unit is the first pressure unit, the second target pressure unit is the second pressure unit, and when the first target pressure unit is the second pressure unit, the second target pressure unit is the third pressure unit.

In practice, when the additional scraping pressure of the first target pressure unit is low, it means that the real-time scraping requirement of the pressure unit is low, a fine-grained pressure control may not be performed any more. And if the first target pressure unit is not a pressure unit with the highest granularity, the first target pressure unit may be merged to a pressure unit with a higher granularity, that is, the first target pressure unit is merged to a corresponding second target pressure unit.

Specifically, when it is considered that the additional scraping pressure in the historical scraping data corresponding to the first pressure unit is not greater than the first preset value, the additional scraping pressure of the first pressure unit is low, and the first pressure unit may be merged to the second pressure unit of the corresponding site. The second pressure unit corresponding to the site is the second pressure unit corresponding to the site to which the website to be scraped in the first pressure unit belongs.

It can be the case that when the additional scraping pressure in the historical scraping data corresponding to the second pressure unit is not greater than a second preset value, the additional scraping pressure of the second pressure unit is low, and the second pressure unit may be merged to the third pressure unit corresponding to the domain name. The third pressure unit corresponds to the domain name, that is, the third pressure unit corresponds to the domain name to which the website to be scraped in the second pressure unit belongs.

In an optional embodiment of the present disclosure, the historical scraping data includes a historical scraping success rate, and the pressure units are split based on the historical scraping data, which includes:
a third target pressure unit is split into at least one fourth target pressure unit, in response to there being the third target pressure unit with a corresponding historical scraping success rate less than a second preset value, in which the matching priority of the third target pressure unit is not the highest, and the matching priority of the fourth target pressure unit is one level higher than that of the third target pressure unit.

The third target pressure unit may be the third pressure unit or the second pressure unit. The matching priority of the fourth target pressure unit is one level higher than that of the third target pressure unit, that is, when the third target pressure unit is the third pressure unit, the fourth target pressure unit is the second pressure unit, and when the third target pressure unit is the second pressure unit, the fourth target pressure unit is the first pressure unit.

In the embodiments of the present disclosure, the pressure unit is split, that is, a large granularity pressure unit is split into the pressure unit with a smaller granularity, that is, a third pressure unit is split into a second pressure unit, and a second pressure unit is split into a first pressure unit.

In practice, when the historical scraping success rate of the third target pressure unit is low, it means that a fine granularity pressure control needs to be performed, and at this time, the third target pressure unit may be split.

Specifically, it can be the case that when the historical scraping success rate of the third pressure unit is less than a third preset value, the historical scraping success rate of the third pressure unit is low, a finer granularity pressure control is needed. The third pressure unit may be split into at least one second pressure unit, that is, the website to be scraped in the third pressure unit is divided into at least one second pressure unit based on the site.

It can be the case that when the historical scraping success rate of the second pressure unit is less than a fourth preset value, the historical scraping success rate of the second pressure unit is low, and the finer granularity pressure control is needed. The second pressure unit needs to be split into at least one second pressure unit, that is, the website to be scraped in the second pressure unit is divided into at least one first pressure unit based on the access path.

In an optional embodiment of the present disclosure, the historical scraping data includes a historical first scraping pressure limit and a historical second scraping pressure limit within a previous scraping period of the current scraping period, and the first scraping pressure limit and the second scraping pressure limit are determined based on the historical scraping data of the pressure unit, which includes at least one of the following items.

The historical first scraping pressure limit is increased based on a first preset rule, and the historical first scraping pressure limit increased is taken as the first scraping pressure limit, in response to the scraping pressure of the pressure unit within the previous scraping period being greater than the historical first scraping pressure limit, and the scraping success rate of the pressure unit within the previous scraping period being greater than a first preset success rate threshold; the historical second scraping pressure limit is taken as the second scraping pressure limit, in response to the first scraping pressure limit being less than the historical second scraping pressure limit; the historical second scraping pressure limit is increased based on a second preset rule, and the historical second scraping pressure limit increased is taken as the second scraping pressure limit, in response to the first scraping pressure limit being not less than the historical second scraping pressure limit.

The historical second scraping pressure limit is reduced based on a third preset rule, and the historical second scraping pressure limit reduced is taken as the second scraping pressure limit, in response to the scraping pressure of the pressure unit within the previous scraping period being not greater than the historical first scraping pressure limit, and the scraping success rate of the pressure unit within the previous scraping period being less than a second preset success rate threshold; the historical first scraping pressure limit is taken as the first scraping pressure limit, in response to the second scraping pressure limit being greater than the historical first scraping pressure limit; the historical first scraping pressure limit is reduced based on a fourth preset rule, and the historical first scraping pressure limit reduced is taken as the first scraping pressure limit, in response to the second scraping pressure limit being not greater than the historical first scraping pressure limit. In the embodiment of the present disclosure, the first scraping pressure limit and the second scraping pressure limit may be determined by analyzing the historical scraping data within the previous scraping period of the current scraping period, so that the rationality and accuracy of the first scraping pressure limit and the second scraping pressure limit are ensured.

Specifically, the historical first scraping pressure limit and the historical second scraping pressure limit within the previous scraping period may be determined firstly, and then the historical first scraping pressure limit and the historical second scraping pressure limit are adjusted based on the actual scraping situation within the previous scraping period.

When the scraping pressure in the previous scraping period is greater than the historical first scraping pressure limit, and the scraping success rate of the pressure unit in the previous scraping period is greater than a preset first success rate threshold, that is, there is a real-time scraping requirement and the scraping success rate is high, it can be the case that the pressure unit can bear a higher scraping pressure. The historical first scraping pressure limit may be increased based on a first preset rule, and the historical first scraping pressure limit increased is used as the first scraping pressure limit of the current scraping period. According to the first preset rule, the historical first scraping pressure limit may be increased by a certain percentage, and the percentage is less than twenty percent.

After the first scraping pressure limit is obtained by increasing the historical first scraping pressure limit, if the first scraping pressure limit is not greater than the historical second scraping pressure limit, the historical second scraping pressure limit may be used as the second scraping pressure limit of the current scraping period. If the first scraping pressure limit is greater than the historical second scraping pressure limit, the historical second scraping pressure limit is increased based on a second preset rule, and the historical second scraping pressure limit increased is taken as the second scraping pressure limit of the current scraping period.

As an example, according to the second preset rule, the historical second scraping pressure limit may be increased by a certain percentage, and the percentage is not greater than twenty percent.

When the scraping pressure within the previous scraping period is not greater than the historical first scraping pressure limit, and the scraping success rate of the pressure unit within the previous scraping period is less than a preset second success rate threshold, that is, when the actual scraping amount is small and the scraping success rate is low, it can be the case that the pressure unit cannot bear a higher scraping pressure. The historical second scraping pressure limit may be reduced based on a third preset rule, the historical second scraping pressure limit reduced is used as the second scraping pressure limit of the current scraping period. According to the third preset rule , the historical second scraping pressure limit may be increased by a certain percentage, and the percentage is less than twenty percent.

After the second scraping pressure limit is obtained by reducing the historical second scraping pressure limit, if the second scraping pressure limit is greater than the historical first scraping pressure limit value, the historical first scraping pressure limit may be used as the first scraping pressure limit of the current scraping period; if the first scraping pressure limit is not greater than the historical first scraping pressure limit, the historical first scraping pressure limit is reduced based on a fourth preset rule, and the historical first scraping pressure limit reduced is taken as the first scraping pressure limit of the current scraping period.

As an example, according to the fourth preset rule, the historical first scraping pressure limit may be reduced by a certain percentage, and the percentage is not greater than twenty percent.

In order to avoid the oscillation of the pressure limit, the percentage of the pressure limit increase or reduce may be limited (for example, not greater than twenty percent), which ensures the smooth adjustment of the pressure limit.

If the current scraping period is the first scraping period, that is, when there is no previous scraping period, the first scraping pressure limit and the second scraping pressure limit of the first scraping period may be set based on an empirical value.

In an optional embodiment of the present disclosure, the above method further includes the following steps.

If the scraping pressure within the previous scraping period of the current scraping period is not greater than a target pressure value and the duration exceeds a preset duration, the first scraping pressure limit is increased based on a fifth preset rule. The target pressure value is a preset percentage of the first scraping pressure limit.

The target pressure value may be a preset percentage of the first scraping pressure limit, for example, ninety percent. The preset duration may be a certain percentage of the time length of a scraping period. For example, a duration of the preset period may be ten minutes, and the preset duration may be five minutes.

When the scraping pressure is not greater than the target pressure value and the duration exceeds the preset duration, it can be the case that the additional scraping pressure of the pressure unit is low. That is, when the real-time requirement is small, the actual scraping pressure rarely breaks through the first scraping pressure limit, the duration is long, and at the moment, a distortion of the first scraping pressure limit may be caused.

In the embodiment of the present disclosure, the first scraping pressure limit may be increased based on a fifth preset rule. With an elapse of time, the first scraping pressure limit will generally reach an upper limit of the real pressure or the second scraping pressure limit after the first scraping pressure limit is continuously increased in a plurality of scraping periods. At the moment, the rule of reducing the first scraping pressure limit and the second scraping pressure limit may be triggered, so as to avoid the distortion of the first scraping pressure limit.

As an example, the second preset rule may be determined based on the following formula:

$$\text{Formula: } A' = \max\left(A+1, (A+B)/2\right)$$

A' is the first scraping pressure limit after adjustment, A is the first scraping pressure limit before adjustment, B is the second scraping pressure limit, and max is a function taking the maximum value, that is, taking the maximum value between the average value of the first scraping pressure limit and the second scraping pressure limit, and the value obtained by adding 1 to the first scraping pressure limit value before adjustment.

In an optional embodiment of the present disclosure, the above method further includes the following steps.

Whether a difference between the scraping pressure of the website to be evaluated within the historical scraping period and the third scraping pressure limit corresponding to the website to be evaluated is related to the scraping success rate of the website to be evaluated within the historical scraping period is determined.

The website to be evaluated is determined as the website to be scraped, in response to the difference being related to the scraping success rate.

In practice, the scraping effect of the website may be affected by various factors. Therefore, there may be a case where the scraping pressure is not directly related to the scraping success rate, and the website is not suitable for controlling the scraping pressure by the method for controlling the scraping pressure provided in the embodiment of the present disclosure.

Specifically, the third scraping pressure limit is equivalent to the first scraping pressure limit of the current period. The difference between the scraping pressure of the website to be evaluated and the third scraping pressure limit may be calculated, and whether the difference is related to the scraping success rate or not is determined, so that whether the scraping pressure is directly related to the scraping success rate or not is judged.

In this embodiment of the present disclosure, the website to be evaluated of which the scraping pressure is directly related to the scraping success rate may be determined as the website to be scraped, and the scraping pressure is controlled by the method for controlling the scraping pressure above.

As an example, FIG. 2 shows a diagram of a quadrant used to evaluate a correlation between a scraping pressure and a scraping success rate provided in one embodiment of the present disclosure. An X axis represents a difference between the scraping pressure of a website to be evaluated and a third scraping pressure limit, and a Y axis represents the scraping success rate. The quadrant shown in FIG. 2 includes a reliable quadrant, a quadrant to be converged, and a contradiction area. The dashed lines in FIG. 2 represent the contradiction area.

For the website to be evaluated in the reliable quadrant, the scraping pressure is related to the scraping success rate. For the website to be evaluated in the quadrant to be converged, the correlation between the scraping pressure and the scraping success rate needs to be further analyzed. For the website to be evaluated in the contradiction area, the scraping pressure is irrelevant to the scraping success rate.

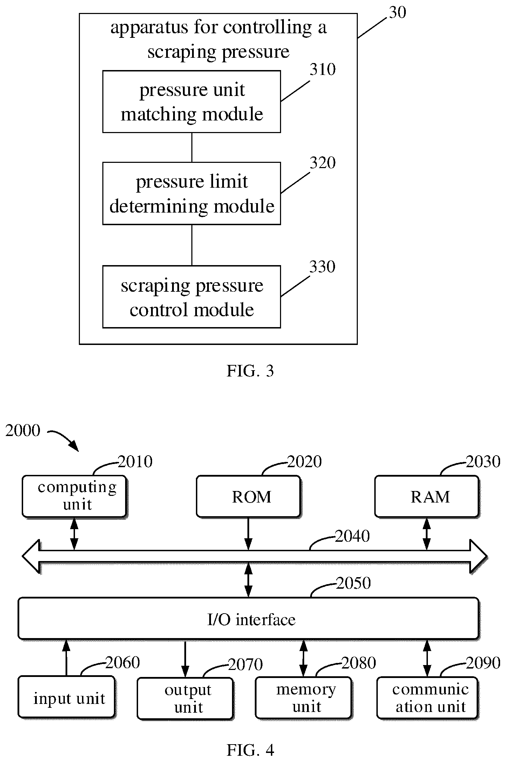

Based on the same principle as the method shown in FIG. 1, FIG. 3 shows a structure diagram of an apparatus for controlling a scraping pressure provided in one embodiment of the present disclosure. As shown in FIG. 3, the apparatus 30 for controlling the scraping pressure may include a pressure unit matching module 310, a pressure limit determining module 320 and a scraping pressure control module 330.

The pressure unit matching module 310 is configured to match a website to be scraped to a pre-configured pressure unit based on a URL of the website to be scraped.

The pressure limit determining module 320 is configured to determine a first scraping pressure limit and a second scraping pressure limit based on historical scraping data of the pressure unit.

The scraping pressure control module 330 is configured to control a scraping pressure of the pressure unit within a current scraping period based on the first scraping pressure limit and the second scraping pressure limit. The scraping pressure is less than the second scraping pressure limit, and the scraping pressure is greater than the first scraping pressure limit in response to a preset pressure condition being satisfied.

According to the apparatus provided by the embodiment of the present disclosure, a website to be scraped is matched to a corresponding pressure unit based on a URL of the website to be scraped. A first scraping pressure limit and a second scraping pressure limit are determined based on historical scraping data of the pressure unit. And a scraping pressure of the pressure unit within a current scraping period is controlled based on the first scraping pressure limit and the second scraping pressure limit. According to the scheme, the website to be scraped is matched to the corresponding pressure unit, the first scraping pressure limit and the second scraping pressure limit are configured for the pressure unit, which achieves the pressure control on the pressure unit. Not only the actual scraping requirement is met, but also the situation that the scraping pressure is too high is avoided, which effectively avoids the problem of scraping failure.

Optionally, the preset pressure condition includes the following items.

The scraping pressure includes an additional scraping pressure, and a scraping task corresponding to the additional scraping pressure needs to be completed within a preset time limit.

Optionally, the number of the pressure unit is at least two, and each of the pressure units is pre-configured with a matching priority, and the pressure unit matching module is configured to:

traverse each of the pressure units with the matching priority according to an order of matching priority from high to low, and sequentially determine whether the website to be scraped matches any one of the pressure units with the matching priority based on the URL of the website to be scraped, until the website to be scraped is matched to a pressure unit, or the traversing is ended.

Optionally, the pressure units include:

a first pressure unit corresponding to an access path in the URL of the website to be scraped;
a second pressure unit corresponding to a site in the URL of the website to be scraped; and,
a third pressure unit corresponding to a domain name in the URL of the website to be scraped. The matching priorities of the pressure units are sequentially the first pressure unit, the second pressure unit and the third pressure unit from high to low.

Optionally, the apparatus also includes a pressure unit adjustment module, which is configured to:
split and/or merge the pressure units based on the historical scraping data before matching the website to be scraped to the pre-configured pressure unit based on the URL of the website to be scraped.

Optionally, the historical scraping data includes a historical scraping pressure, and when the pressure unit adjustment module merges the pressure units based on historical scraping data, the pressure unit adjustment module is specifically configured to:
merge the first target pressure unit to a corresponding second target pressure unit, in response to there being a first target pressure unit of which an additional scraping pressure in corresponding historical scraping pressures not greater than a first preset value. The matching priority of the first target pressure unit is not the lowest, and the matching priority of the second target pressure unit is one level lower than that of the first target pressure unit.

Optionally, the historical scraping data includes a historical scraping success rate, and when the pressure unit adjustment module splits the pressure units based on historical scraping data, the pressure unit adjustment module is specifically configured to:
split a third target pressure unit into at least one fourth target pressure unit, in response to there being the third target pressure unit with a corresponding historical scraping success rate less than a second preset value. The matching priority of the third target pressure unit is not the highest, and the matching priority of the fourth target pressure unit is one level higher than that of the third target pressure unit.

Optionally, the historical scraping data includes a historical first scraping pressure limit and a historical second scraping pressure limit within a previous scraping period of the current scraping period, and the pressure limit determining module is configured to:

increase the historical first scraping pressure limit based on a first preset rule, and take the historical first scraping pressure limit increased as the first scraping pressure limit, in response to the scraping pressure of the pressure unit within the previous scraping period being greater than the historical first scraping pressure limit, and the scraping success rate of the pressure unit within the previous scraping period being greater than a first preset success rate threshold; take the historical second scraping pressure limit as the second scraping pressure limit, in response to the first scraping pressure limit being less than the historical second scraping pressure limit; increase the historical second scraping pressure limit based on a second preset rule, and take the historical second scraping pressure limit increased as the second scraping pressure limit, in response to the first scraping pressure limit being not less than the historical second scraping pressure limit; or reduce the historical second scraping pressure limit based on a third preset rule, and take the historical second scraping pressure limit reduced as the second scraping pressure limit, in response to the scraping pressure of the pressure unit within the previous scraping period being not greater than the historical first scraping pressure limit, and the scraping success rate of the pressure unit within the previous scraping period being less than a second preset success rate threshold; take the historical first scraping pressure limit as the first scraping pressure limit, in response to the second scraping pressure limit being greater than the historical first scraping pressure limit; reduce the historical first scraping pressure limit based on a fourth preset rule, and take the historical first scraping pressure limit reduced as the first scraping pressure limit, in response to the second scraping pressure limit being not greater than the historical first scraping pressure limit.

Optionally, the pressure limit adjustment module is also configured to:
increase the first scraping pressure limit based on a fifth preset rule, in response to the scraping pressure in a previous scraping period of the current scraping period being not greater than a target pressure value and a duration exceeding a preset time, in which the target pressure value is a preset percentage of the first scraping pressure limit.

Optionally, the apparatus also includes a correlation evaluation module, which is configured to:

determine whether the difference between the scraping pressure of the website to be evaluated within the historical scraping period and the third scraping pressure limit corresponding to the website to be evaluated is related to the scraping success rate of the website to be evaluated within the historical scraping period; and
determine the website to be evaluated as the website to be scraped, in response to the difference being related to the scraping success rate.

It can be understood that the above-mentioned modules of the apparatus for controlling the scraping pressure in the embodiments of the present disclosure have the function of implementing the corresponding steps of the method for controlling the scraping pressure in the embodiment shown in FIG. 1. The function may be implemented by a hardware, or may be implemented by a hardware to execute a corresponding software. The hardware or the software includes one or more modules corresponding to the foregoing functions. The modules may be software and/or hardware, and the foregoing modules may be implemented separately or may be implemented by integrating a plurality of modules. The functional description of each module of the above-mentioned apparatus for controlling the scraping pressure may be specifically described in the corresponding description of the method for controlling the scraping pressure in the embodiment shown in FIG. 1.

In the technical solution of the present disclosure, all acquisition, storage, application, and the like of the related user personal information meet related laws and regulations, and do not violate the public order yield.

In the present disclosure, an electronic device, a readable storage medium and a computer program product are further provided according to embodiments of the present disclosure.

The electronic device includes: at least one processor; and a memory communicating with the at least one processor; the memory stores instructions executable by the at least one processor, and the instructions are executed by the at least one processor, so that the at least one processor may execute a method for controlling a scraping pressure according to the embodiments of the present disclosure.

Compared with the related technology, the electronic device matches a website to be scraped to a corresponding pressure unit based on a URL of the website to be scraped. A first scraping pressure limit and a second scraping pressure limit are determined based on historical scraping data of the pressure unit. And a scraping pressure of the pressure unit within a current scraping period is controlled based on the first scraping pressure limit and the second scraping pressure limit. According to the scheme, the website to be scraped is matched to the corresponding pressure unit, the first scraping pressure limit and the second scraping pressure limit are configured for the pressure unit, which achieves the pressure control on the pressure unit. Not only the actual scraping requirement is met, but also the situation that the scraping pressure is too high is avoided, which effectively avoids the problem of scraping failure.

The readable storage medium is a non-instantaneous computer readable storage medium that stores computer instructions, and the computer instructions are used to enable the computer to perform the method for controlling the scraping pressure provided in the embodiment of the present disclosure.

When the readable storage medium is compared with the related technology, a website to be scraped is matched to a corresponding pressure unit based on a URL of the website to be scraped. A first scraping pressure limit and a second scraping pressure limit are determined based on historical scraping data of the pressure unit. And a scraping pressure of the pressure unit within a current scraping period is controlled based on the first scraping pressure limit and the second scraping pressure limit. According to the scheme, the website to be scraped is matched to the corresponding pressure unit, the first scraping pressure limit and the second scraping pressure limit are configured for the pressure unit, which achieves the pressure control on the pressure unit. Not only the actual scraping requirement is met, but also the situation that the scraping pressure is too high is avoided, which effectively avoids the problem of scraping failure.

The computer program product includes a computer program, which implements a method for controlling a scraping pressure as provided in the embodiment of the present disclosure when executed by a processor.

Compared with the related technology, the computer program product matches a website to be scraped to a pre-configured pressure unit based on a URL of the website to be scraped. A first scraping pressure limit and a second scraping pressure limit are determined based on historical scraping data of the pressure unit. And a scraping pressure of the pressure unit within a current scraping period is controlled based on the first scraping pressure limit and the second scraping pressure limit. According to the scheme, the website to be scraped is matched to the corresponding pressure unit, the first scraping pressure limit and the second scraping pressure limit are configured for the pressure unit, which achieves the pressure control on the pressure unit. Not only the actual scraping requirement is met, but also the situation that the scraping pressure is too high is avoided, which effectively avoids the problem of scraping failure.

FIG. 4 is a block diagram illustrating an example electronic device 2000 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As shown in Fig. 4, a device 2000 includes a computing unit 2010, configured to execute various appropriate actions and processes according to a computer program stored in a read-only memory (ROM) 2020 or loaded from a memory unit 2080 to a random access memory (RAM) 2030. In a RAM 2030, various programs and data required for a device 2000 may be stored. A computing unit 2010, a ROM 2020 and a RAM 2030 may be connected with each other by a bus 2040. An input/output (I/O) interface 2050 is also connected to a bus 2040.

A plurality of components in the device 2000 are connected to an I/O interface 505, and includes: an input unit 2060, for example, a keyboard, a mouse, etc.; an output unit 2070, for example, various types of displays, speakers, etc.; a memory unit 2080, for example, a magnetic disk, an optical disk, etc.; and a communication unit 2090, for example, a network card, a modem, a wireless transceiver, etc. A communications unit 2090 allows a device 2000 to exchange information/data through a computer network such as internet and/or various types of telecommunication networks and other devices.

A computing unit 2010 may be various types of general and/or dedicated processing components with processing and computing ability. Some examples of a computing unit 2010 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 2010 performs the method for controlling a scraping pressure provided in one embodiment of the present disclosure. For example, in some embodiments, a method for controlling a scraping pressure may be further implemented as a computer software program, which is physically contained in a machine readable medium, such as a memory unit 2080. In some embodiments, a part or all of the computer program may be loaded and/or installed on the device 2000 through a ROM 2020 and/or a communication unit 2090. When the computer program is loaded on a RAM 2030 and executed by a computing unit 2010, one or more steps in the method for controlling the scraping pressure as described above may be performed. Alternatively, in other embodiments, a computing unit 2010 may be configured to execute a method for controlling a scraping pressure provided in the embodiment of the present disclosure in the other appropriate ways (for example, by virtue of a firmware).

Various implementation modes of systems and technologies described herein may be implemented in a digital electronic circuit system, an integrated circuit system, a field programmable gate array (FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine-readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory(CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relation between the client and the server is generated by computer programs that run on the corresponding computer and have a client-server relationship with each other. The server may be a cloud server, may also be a server with a distributed system, or a server in combination with a blockchain.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the spirit and principle of embodiments of the present disclosure shall be included within the protection scope of embodiments of the present disclosure.

**Claims**

1. A method for controlling a scraping pressure, comprising:

matching a website to be scraped to a pre-configured pressure unit based on a URL of the website to be scraped;
determining a first scraping pressure limit and a second scraping pressure limit based on historical scraping data of the pressure unit; and
controlling the scraping pressure of the pressure unit within a current scraping period based on the first scraping pressure limit and the second scraping pressure limit, wherein the scraping pressure is less than the second scraping pressure limit, and the scraping pressure is greater than the first scraping pressure limit in response to a preset pressure condition being satisfied.

2. The method of claim 1, wherein the pressure condition comprises:
the scraping pressure comprising an additional scraping pressure, and a scraping task corresponding to the additional scraping pressure needing to be completed within a preset time limit.

3. The method of claim 1 or 2, wherein the number of the pressure unit is at least two, each of the pressure units is pre-configured with a matching priority, and matching the website to be scraped to the pre-configured pressure unit based on the URL of the website to be scraped comprises:
traversing each of the pressure units with the matching priority according to an order of matching priority from high to low, and sequentially determining whether the website to be scraped matches any one of the pressure units with the matching priority based on the URL of the website to be scraped until the website to be scraped is matched to a pressure unit, or stopping the traversing.

4. The method of claim 3, wherein the pressure units comprise:

a first pressure unit corresponding to an access path in the URL of the website to be scraped;
a second pressure unit corresponding to a site in the URL of the website to be scraped; and
a third pressure unit corresponding to a domain name in the URL of the website to be scraped, wherein the matching priorities of the pressure units are sequentially the first pressure unit, the second pressure unit and the third pressure unit from high to low.

5. The method of claim 3 or 4, wherein before matching the website to be scraped to the pre-configured pressure unit based on the URL of the website to be scraped, the method further comprises:
splitting the pressure units and/or merging the pressure units based on the historical scraping data.

6. The method of claim 5, wherein the historical scraping data comprises a historical scraping pressure, and merging the pressure units based on the historical scraping data comprises:
merging a first target pressure unit to a corresponding second target pressure unit, in response to there being the first target pressure unit of which an additional scraping pressure in corresponding historical scraping pressures not greater than a first preset value, wherein the matching priority of the first target pressure unit is not the lowest, and the matching priority of the second target pressure unit is one level lower than the matching priority of the first target pressure unit.

7. The method of claim 5, wherein the historical scraping data comprises a historical scraping success rate, and splitting the pressure units based on the historical scraping data comprises:
splitting a third target pressure unit into at least one fourth target pressure unit, in response to there being the third target pressure unit with a corresponding historical scraping success rate less than a second preset value, wherein, the matching priority of the third target pressure unit is not the highest, and the matching priority of the fourth target pressure unit is one level higher than the matching priority of the third target pressure unit.

8. The method of any of claims 1-7, wherein the historical scraping data comprises a historical first scraping pressure limit and a historical second scraping pressure limit within a previous scraping period of the current scraping period, and determining the first scraping pressure limit and the second scraping pressure limit based on the historical scraping data of the pressure unit comprises at least one of:

increasing the historical first scraping pressure limit based on a first preset rule, and taking the historical first scraping pressure limit increased as the first scraping pressure limit, in response to the scraping pressure of the pressure unit within the previous scraping period being greater than the historical first scraping pressure limit, and the scraping success rate of the pressure unit within the previous scraping period being greater than a first preset success rate threshold; taking the historical second scraping pressure limit as the second scraping pressure limit, in response to the first scraping pressure limit being less than the historical second scraping pressure limit; increasing the historical second scraping pressure limit based on a second preset rule, and taking the historical second scraping pressure limit increased as the second scraping pressure limit, in response to the first scraping pressure limit being not less than the historical second scraping pressure limit; or reducing the historical second scraping pressure limit based on a third preset rule, and taking the historical second scraping pressure limit reduced as the second scraping pressure limit, in response to the scraping pressure of the pressure unit within the previous scraping period being not greater than the historical first scraping pressure limit, and the scraping success rate of the pressure unit within the previous scraping period being less than a second preset success rate threshold; taking the historical first scraping pressure limit as the first scraping pressure limit, in response to the second scraping pressure limit being greater than the historical first scraping pressure limit; reducing the historical first scraping pressure limit based on a fourth preset rule, and taking the historical first scraping pressure limit reduced as the first scraping pressure limit, in response to the second scraping pressure limit being not greater than the historical first scraping pressure limit.

9. The method of any of claims 1 to 8, further comprising:
increasing the first scraping pressure limit based on a fifth preset rule, in response to the scraping pressure in a previous scraping period of the current scraping period being not greater than a target pressure value and a duration exceeding a preset time, wherein the target pressure value is a preset percentage of the first scraping pressure limit.

10. The method of any of claims 1 to 9, further comprising:

determining whether a difference between the scraping pressure of the website to be evaluated within the historical scraping period and the third scraping pressure limit corresponding to the website to be evaluated is related to the scraping success rate of the website to be evaluated within the historical scraping period; and
determining the website to be evaluated as the website to be scraped, in response to the difference being related to the scraping success rate.

11. A apparatus for controlling a scraping pressure, comprising:

a pressure unit matching module, configured to match a website to be scraped to a pre-configured pressure unit based on a URL of the website to be scraped;
a pressure limit determining module, configured to determine a first scraping pressure limit and a second scraping pressure limit based on historical scraping data of the pressure unit; and
a scraping pressure control module, configured to control a scraping pressure of the pressure unit within a current scraping period based on the first scraping pressure limit and the second scraping pressure limit, wherein the scraping pressure is less than the second scraping pressure limit, and the scraping pressure is greater than the first scraping pressure limit in response to a preset pressure condition being satisfied.

12. The apparatus of claim 11, wherein pressure condition comprises:
the scraping pressure comprising an additional scraping pressure, and a scraping task corresponding to the additional scraping pressure needing to be completed within a preset time limit.

13. The apparatus of claim 11 or 12, wherein the number of the pressure unit is at least two, each of the pressure units is pre-configured with a matching priority, and the pressure unit matching module is configured to:
traverse each of the pressure units with the matching priority according to an order of matching priority from high to low, and sequentially determining whether the website to be scraped matches any one of pressure units with the matching priority based on the URL of the website to be scraped until the website to be scraped is matched to a pressure unit, or stopping the traversing.

14. The apparatus of claim 13, wherein the pressure units comprise:

a first pressure unit corresponding to an access path in the URL of the website to be scraped;
a second pressure unit corresponding to a site in the URL of the website to be scraped; and,
a third pressure unit corresponding to a domain name in the URL of the website to be scraped, wherein the matching priorities of the pressure units are sequentially the first pressure unit, the second pressure unit and the third pressure unit from high to low.

15. The apparatus of claim 13 or 14, further comprising a pressure unit adjustment module, wherein the pressure unit adjustment module is configured to:
before match the website to be scraped to the pre-configured pressure unit based on the URL of the website to be scraped, split the pressure unit and/or merge the pressure units based on the historical scraping data.

**16.** The apparatus of claim 15, wherein the historical scraping data comprises historical scraping pressures, and when the pressure unit adjustment module merges the pressure units based on historical scraping data, the pressure unit adjustment module is specifically configured to:
merge the first target pressure unit to a corresponding second target pressure unit, in response to there being a first target pressure unit of which an additional scraping pressure in corresponding historical scraping pressures not greater than a first preset value, wherein the matching priority of the first target pressure unit is not the lowest, and the matching priority of the second target pressure unit is one level lower than the matching priority of the first target pressure unit.

**17.** The apparatus of claim 15, wherein the historical scraping data comprises a historical scraping success rate, and when the pressure unit adjustment module splits the pressure units based on historical scraping data, the pressure unit adjustment module is specifically configured to:
split a third target pressure unit into at least one fourth target pressure unit, in response to there being the third target pressure unit with a corresponding historical scraping success rate less than a second preset value, wherein, the matching priority of the third target pressure unit is not the highest, and the matching priority of the fourth target pressure unit is one level higher than the matching priority of the third target pressure unit.

**18.** The apparatus of any of claims 11-17, wherein the historical scraping data comprises a historical first scraping pressure limit and a historical second scraping pressure limit within a previous scraping period of the current scraping period, and the pressure limit determining module is configured to at least one of:

increase the historical first scraping pressure limit based on a first preset rule, and take the historical first scraping pressure limit increased as the first scraping pressure limit, in response to the scraping pressure of the pressure unit within the previous scraping period being greater than the historical first scraping pressure limit, and the scraping success rate of the pressure unit within the previous scraping period being greater than a first preset success rate threshold; take the historical second scraping pressure limit as the second scraping pressure limit, in response to the first scraping pressure limit being less than the historical second scraping pressure limit; increase the historical second scraping pressure limit based on a second preset rule, and take the historical second scraping pressure limit increased as the second scraping pressure limit, in response to the first scraping pressure limit being not less than the historical second scraping pressure limit; or
reduce the historical second scraping pressure limit based on a third preset rule, and take the historical second scraping pressure limit reduced as the second scraping pressure limit, in response to the scraping pressure of the pressure unit within the previous scraping period being not greater than the historical first scraping pressure limit, and the scraping success rate of the pressure unit within the previous scraping period being less than a second preset success rate threshold; take the historical first scraping pressure limit as the first scraping pressure limit, in response to the second scraping pressure limit being greater than the historical first scraping pressure limit; reduce the historical first scraping pressure limit based on a fourth preset rule, and take the historical first scraping pressure limit reduced as the first scraping pressure limit, in response to the second scraping pressure limit being not greater than the historical first scraping pressure limit.

**19.** The apparatus of any one of claims 11 to 18, wherein the pressure limit determining module is configured to:
increase the first scraping pressure limit based on a fifth preset rule, in response to the scraping pressure in a previous scraping period of the current scraping period being not greater than the target pressure value and the duration exceeding a preset time, wherein the target pressure value is a preset percentage of the first scraping pressure limit.

**20.** The apparatus of any of claims 11 to 19, wherein the apparatus further comprises a correlation evaluation module, and the correlation evaluation module is configured to:

determine whether the difference between the scraping pressure of the website to be evaluated within the historical scraping period and the third scraping pressure limit corresponding to the website to be evaluated is related to the scraping success rate of the website to be evaluated within the historical scraping period; and
determine the website to be evaluated as the website to be scraped, in response to the difference being related to the scraping success rate.

**21.** An electronic device, comprising:

at least one processor; and
a memory communicatively coupled to the at least one processor; wherein,

the memory is stored with instructions executable by the at least one processor, when the instructions are executed by the at least one processor, the at least one processor is caused to execute the method of any one of claims 1 to 10.

22. A non-transitory computer-readable storage medium having computer instructions stored thereon, wherein the computer instructions are configured to cause a computer to execute the method of any one of claims 1 to 10.

23. A computer program product comprising a computer program, wherein, the computer program is configured to execute the method of any one of claims 1 to 10 when executed by a processor.

matching a website to be scraped to a pre-configured pressure unit based on a URL of the website to be scraped ⌐S110

↓

determining a first scraping pressure limit and a second scraping pressure limit based on historical scraping data of the pressure unit ⌐S120

↓

controlling a scraping pressure of the pressure unit in a current scraping period based on the first scraping pressure limit and the second scraping pressure limit, wherein the scraping pressure is less than the second scraping pressure limit, and the scraping pressure is greater than the first scraping pressure limit in response to a preset pressure condition being satisfied ⌐S130

FIG. 1

contradiction

to be converged

reliable

reliable

to be converged

FIG. 2

apparatus for controlling a
scraping pressure — 30

pressure unit
matching module — 310

pressure limit
determining module — 320

scraping pressure
control module — 330

FIG. 3

2000 —

computing
unit — 2010

ROM — 2020

RAM — 2030

— 2040

— 2050

I/O interface

input unit — 2060

output
unit — 2070

memory
unit — 2080

communic
ation unit — 2090

FIG. 4

## INTERNATIONAL SEARCH REPORT

| International application No. |
| --- |
| **PCT/CN2022/079548** |

**A. CLASSIFICATION OF SUBJECT MATTER**

G06F 16/951(2019.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 抓取, 压力, 控制, 网址, 网站, 匹配, 历史, 限值, matching, grasping, pressure, control, limit, website, historical

**C. DOCUMENTS CONSIDERED TO BE RELEVANT**

| Category* | Citation of document, with indication, where appropriate, of the relevant passages | Relevant to claim No. |
| --- | --- | --- |
| PX | CN 113486229 A (BEIJING BAIDU NETCOM SCIENCE AND TECHNOLOGY CO., LTD.) 08 October 2021 (2021-10-08) claims 1-14, and description, paragraphs [0030]-[0146] | 1-23 |
| A | CN 104392000 A (BEIJING QIHOO TECHNOLOGY CO., LTD. et al.) 04 March 2015 (2015-03-04) description, paragraphs [0050]-[0144] | 1-23 |
| A | CN 110555147 A (SHANGHAI MAKE RICH NETWORK TECHNOLOGY CO., LTD.) 10 December 2019 (2019-12-10) entire document | 1-23 |
| A | CN 112948731 A (ZTE CORP.) 11 June 2021 (2021-06-11) entire document | 1-23 |
| A | US 2020082331 A1 (INTERNATIONAL BUSINESS MACHINES CORP.) 12 March 2020 (2020-03-12) entire document | 1-23 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 May 2022** | **09 June 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/079548**

| Patent document cited in search report | | | Publication date (day/month/year) | Patent family member(s) | Publication date (day/month/year) |
|---|---|---|---|---|---|
| CN | 113486229 | A | 08 October 2021 | None | |
| CN | 104392000 | A | 04 March 2015 | None | |
| CN | 110555147 | A | 10 December 2019 | None | |
| CN | 112948731 | A | 11 June 2021 | None | |
| US | 2020082331 | A1 | 12 March 2020 | None | |

Form PCT/ISA/210 (patent family annex) (January 2015)